# EUROPÄISCHE PATENTSCHRIFT

(11) **EP 0 865 857 B1**
(45) Veröffentlichungstag und Bekanntmachung des Hinweises auf die Patenterteilung: **04.12.2002**
(21) Anmeldenummer: 98105098.2
(22) Anmeldetag: 20.03.1998
(51) Int. Cl.: B23K 1/00, B23K 10/00

(54) **Verfahren zum Signieren mit einer Lichtbogenmaschine**
Labeling process using an electric arc
Procédé de marquage utilisant un arc électrique

(30) Priorität: 21.03.1997 DE 19711824
(43) Veröffentlichungstag der Anmeldung: 23.09.1998
(73) Patentinhaber: ESAB-HANCOCK GmbH, D-61184 Karben (DE)
(72) Erfinder: Meyer, Klaus, 63128 Dietzenbach (DE); Sperlich, Willibald, 61209 Echzell (DE)
(74) Vertreter: Schubert, Siegmar, Dipl.-Ing.

(56) Entgegenhaltungen:
- FR-A- 2 237 720
- US-A- 3 534 388
- H. MAIR: "Podiumsdiskussion,, Thermisches Schneiden - Anwendungen und Grenzen ,," DVS - BERICHTE,, 1987, XP002069378
- ARC-MARKER, Plasma-Markiergerät, Prospekt der Fa. ESAB-HANCOCK GmbH, Robert-Bosch Strasse 20, D-61 184 KARBEN, Nr Stro : 930902d

## Beschreibung

Die Erfindung betrifft ein Verfahren zum Signieren mit einer Lichtbogenmaschine nach dem Oberbegriff des Anspruchs 1.

Ein derartiges bekanntes Verfahren wird mit einer Lichtbogenmaschine ausgeübt, die eine Düsenanordnung mit einer Innendüse und einem diese umgrenzenden Ringspalt aufweist (ARC-MARKER, Plasma-Markiergerät, Prospekt der Fa. ESAB-HANCOCK GmbH, Robert-Bosch-Straße 20, 61184 Karben, Nr. Stro 930902d).

Zum Signieren wird der Innendüse Plasmagas, insbesondere Argon, zugeführt, welches auf das zu signierende Werkstück, und zwar an der Stelle einer Signierlinie, gerichtet wird. Zugleich ist das Argongas durch aus dem Ringspalt austretendes Sekundärgas umgeben, welches somit praktisch ringförmig konzentrisch zu dem Argongasstrahl auf das Werkstück trifft. Zum Signieren fließt weiterhin ein geregelter Signierstrom zwischen der Düsenanordnung und dem Werkstück. Die Düsenanordnung wird in Richtung der gewünschten Signierlinie verfahren, wobei ein gleichmäßiger Höhenabstand zu dem Werkstück eingehalten wird. Das Werkstück ist auf der zu signierenden Seite mit einer Primerschicht versehen, die als Korrosionsschutz dient. Damit wird im wesentlichen nur eine Oberflächenschicht des Werkstücks zum Beschriften oder Markieren durch einen elektrisch leitenden Plasmalichtbogen verändert. Insbesondere wird eine Primerschicht auf dem Werkstück entlang der Signierlinie ausgebrannt. Gespritzte bzw. lackierte Oberflächen haben aber den Nachteil, daß die Farbe insbesondere bei hoher Signiergeschwindigkeit und dazu erforderlicher Signierstromstärke um die Markierung wegbrennt und keine scharf abgegrenzte Markierung entsteht.

Es ist gewünscht, den Signiervorgang so rasch wie möglich ablaufen zu lassen, um die Signierzeiten kurz zu halten. Einer Erhöhung der Signiergeschwindigkeit ist jedoch dadurch eine Grenze gesetzt, daß bei zu hoher Signiergeschwindigkeit und dem dazu erforderlichen hohen Signierstrom die Signierlinie nicht mehr eindeutig definiert ist, da deren Ränder sehr unregelmäßig, d.h. ausgefranst verlaufen, und die Signierlinie durch nur unvollständig verbrannten Primer unterbrochen wird. Die erreichbare Signiergeschwindigkeit ist dabei auch von der Art des Primers abhängig.

Bekannt ist bereits das Plasmaschneiden mit Wasserinjektion, bei dem durch Einführen von Wasser zwischen einer Kupfer- und Keramikschneiddüse der Lichtbogen weiter eingeschnürt wird, wodurch die Energiestromdichte und die Temperatur des Plasmastrahls ansteigen (H. MAIR: "Podiumsdiskussion, Thermisches Schneiden - Anwendungen und Grenzen" DVS-Berichte, 1987, XP002069378). Dabei verdampft nur ein geringer Prozentsatz des Wassers. Das restliche Wasser kühlt die Oberfläche des zu schneidenden Werkstücks und soll die Oxidbildung auf der Schnittfläche reduzieren. Die gute Kühlung des Werkstücks durch das Injektionswasser und die hohe Schneidgeschwindigkeit sollen ein verzugsarmes Schneiden ermöglichen. - Bei dieser Wasserinjektionsplasmatechnik fließt ein Schneidstrom, der typischerweise wesentlich höher als ein Signierstrom ist, wobei Werkstücke über deren gesamte Materialdicke durchgetrennt werden und nicht deren Oberfläche bzw. eine Primerschicht auf dieser ausgebrannt wird. Bei dem Wasserinjektionsplasmaschneiden wird der Wasserdurchfluß nicht so niedrig eingestellt, daß das Werkstück schnell trocken wird.

Im übrigen ist die Regelung bzw. Einstellung eines Kühlwasserdurchflusses auf einen bestimmten Wert bekannt, welcher einer Plasmaschneidelektrode zugeführt und von einem Ausgang abgeführt wird, ohne daß das Kühlwasser mit dem Plasmastrahl oder dem Werkstück in direkte Berührung gelangt (FR-A-2 237 720). Aus der Temperaturdifferenz des Kühlwassers und dessen Durchfluß kann die der Plasmaschneidelektrode entzogene Wärme ermittelt werden.

Der vorliegenden Erfindung liegt die Aufgabe zugrunde, ein Verfahren zum Signieren mit einer Lichtbogenmaschine zu schaffen, mit dem bei höherer Signiergeschwindigkeit scharf umrissene Signierlinien auf dem Werkstück markiert werden und bei dem die Signierlinien, die blankes Metall darstellen, nicht korrodieren.

Diese Aufgabe wird erfindungsgemäß durch das in dem Anspruch 1 angegebene Verfahren gelöst.

Nach diesem Verfahren wird eine erhebliche Erhöhung der Signiergeschwindigkeit bei sehr scharfen Signierlinien erzielt. Dabei wird verhindert, daß Farbe bzw. Primer neben der Signierlinie bzw. Markierung verbrennt. Zu diesem überraschenden Effekt trägt vermutlich außer der Kühlwirkung des Wassers bei, daß aus dem Wasser dissoziierter Sauerstoff den Primer vollständig verbrennt. Dazu ist keine weitere Erhöhung des Signierstroms erforderlich, der zweckmäßig auf 20 A begrenzt werden kann.

Weiterhin ist kein großer Wasserverbrauch erforderlich, wie er zum Signieren des Werkstücks unter Wasser benötigt würde, wobei also das Werkstück von Wasser bedeckt ist und die Düsenanordnung in das Wasser eintaucht. Dabei ist der Strombedarf wegen der Leitfähigkeit des großen Wasservolumens erheblich.

Durch die Regelung bzw. Bemessung des Wasserdurchflusses, der auf das Werkstück gerichtet ist, wird einerseits erreicht, daß eine noch scharfe Signierlinie entsteht und daß andererseits das Wasser während des Signiervorgangs weitgehend verdampft. Damit wird nicht nur der Wassereinsatz begrenzt, sondern es wird vor allem erreicht, daß das signierte Werkstück nach dem Signiervorgang schnell trocken ist, weshalb die Signierlinie, die nach dem erfindungsgemäßen Verfahren blankes Metall darstellt, nicht korrodiert.

Durch das zum Markierlichtbogen eingespritzte Wasser als Sekundärmedium wird die Markierlichtbogenenergie eingeschnürt und die Markierlichtbogenenergiedichte erhöht. Zugleich wird durch das eingespritzte Wasser die Oberfläche des Werkstücks gekühlt.

Das erfindungsgemäße Verfahren kann ohne nennenswerte Erhöhung des apparativen Aufwands unter der Verwendung herkömmlicher Düsenanordnungen ausgeübt werden, die konstruktiv einfach zur Zufuhr des Wassers in den Ringspalt abzuwandeln sind. Dies ist Gegenstand des Anspruchs 3.

Die obigen Vorteile können im wesentlichen unabhängig von dem verwendeten Grundwerkstoff des Werkstücks und dem auf diesem aufgetragenen Primer bzw. der Farbe erreicht werden.

Je nach Lichtbogenintensität, Markiergeschwindigkeit und Wahl des Plasmagases - siehe Anspruch 4 - können die Breite und Tiefe der Markierung bestimmt werden.

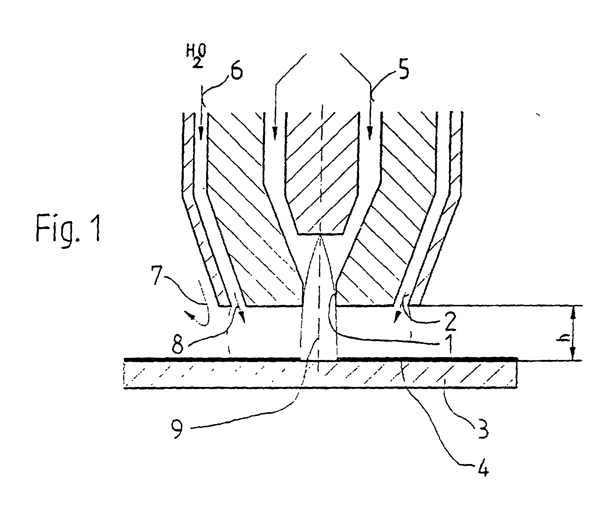

Ein Ausführungsbeispiel der zur Durchführung des erfindungsgemäßen Verfahrens verwendeten Düsenanordnung ist in Fig. 1 gezeigt, in der die Düsenanordnung in einem Schnitt grob schematisch gezeigt ist:

Die Düsenanordnung umfaßt eine Innendüse 1, die von einem Ringspalt 2 umgeben ist. Die Innendüse 1 und der Ringspalt 2 sind, wie dargestellt, auf die Oberseite eines Werkstücks 3 gerichtet, welches auf seiner Oberseite eine Schicht 4 Primer aufweist. Der Abstand der Öffnungen der Innendüse 1 und des Ringspalts 2 zu der Oberseite des Werkstücks 3 wird durch eine Regelung konstant gehalten.

Zum Signieren wird der Innendüse Plasmagas, Argon oder ein mit Argon gebildetes Gemisch, über einen inneren Kanal 5 zugeleitet. Gleichzeitig wird über einen äußeren Kanal 6, der zu dem Ringspalt führt, eine geregelte Wassermenge eingeleitet. Das Wasser tritt dann, wie mit Pfeilen 7, 8 angedeutet, aus dem Ringspalt 2 aus. Nicht dargestellt ist in der Zeichnung die Zufuhr eines Signierstroms in üblicher Höhe. Während des Signiervorgangs wird die beschriebene Düsenanordnung bezüglich des Werkstücks 3 verfahren. Dabei wird die Signierlinie aus der Primerschicht scharf an der Stelle ausgebrannt, die durch eine Mittellinie 9 durch die Düsenanordnung angedeutet ist.

### Typisches Verfahrensbeispiel:

Das Verfahren wird mit einem Durchmesser der Innendüse von 0,6 mm ausgeübt, die von einem Ringspalt umgeben ist. Es wird der Innendüse 10 l/min Argon als Plasmagas zugeführt. Dem Ringspalt wird als Sekundärmedium Wasser mit einem Durchfluß von 0,2 l/min zugeführt. Der Signierstrom beträgt 20 A Gleichstrom. Bei einem Düsenabstand h von 2,5 mm zu der Oberfläche des Werkstücks wird eine Linienbreite von 1,2 - 1,5 mm signiert. Diese Signiergeschwindigkeit beträgt dabei 18 m/min.

## Patentansprüche

1. Verfahren zum Signieren mit einer Lichtbogenmaschine, bei dem aus einer Düsenanordnung (1, 2) Plasmagas von einem Sekundärmedium umgrenzt auf ein Werkstück gerichtet wird, wobei zwischen der Düsenanordnung (1, 2) und dem Werkstück (3) ein Signierstrom fließt,
**dadurch gekennzeichnet,**
**daß** als das Plasmagas umgrenzendes Sekundärmedium Wasser während des Signiervorganges auf das Werkstück (3) gerichtet wird und daß der Durchfluß auf das Werkstück (3) geregelt ist, so daß Wasser während des Signiervorgangs weitgehend verdampft.

2. Verfahren nach Anspruch 1,
**dadurch gekennzeichnet,**
**daß** durch zum Markierlichtbogen eingspritztes Wasser als Sekundärmedium die Markierlichtbogenenergie eingeschnürt wird und die Markierlichtbogenenergiedichte erhöht wird, während zugleich durch das eingespritzte Wasser die Oberfläche des Werkstücks (3) gekühlt wird.

3. Verfahren nach Anspruch 1,
**dadurch gekennzeichnet,**
**daß** das Plasmagas aus einer Innendüse und das Wasser aus einem diese umgrenzenden Ringspalt (2) aus der Düsenanordnung (1, 2) austritt.

4. Verfahren nach einem der vorangehenden Ansprüche,
**gekennzeichnet durch**
einen Signierstrom bis 20 A.

5. Verfahren nach einem der vorangehenden Ansprüche,
**gekennzeichnet durch**
die Verwendung von Argon, Argon-Kohlendioxidgemisch, Argon-Wasserstoffgemisch oder einem anderen mit Argon gebildeten Plasmagas.

## Claims

1. Labeling process using an electric arc, wherein a plasma gas surrounded by a secondary medium is directed from a nozzle system (1, 2) on a work piece while between said nozzle system (1,2) and said work piece (3) a labeling current flows,
**characterized in**
**that** during the labeling process water surrounding the plasma gas as the secondary medium is directed towards said work piece (3) and that the flow rate onto said work piece (3) is controlled so that the water is substantially evaporating during the labeling process.

2. Labeling process according to claim 1
**characterized in**
**that** by the water injected as the secondary medium to the labeling electric arc, the labeling electric arc energy is constricted and the labeling electric arc energy density is elevated while at the same time the surface of said work piece (3) is cooled by said injected water.

3. Labeling process according to claim 1,
**characterized in**
**that** said plasma gas exits from an inner nozzle and the water from an annular slot (2) surrounding it, from said jet system (1, 2).

4. Labeling process according to one of the foregoing claims
**characterized by**
a labeling current amounting up to 50 amperes.

5. Labeling process according to one of the foregoing claims
**characterized by**
the use of argon, an argon-carbon dioxide mixture, an argon-hydrogen mixture or an other plasma gas formed with argon.

## Revendications

1. Procédé de marquage utilisant un arc électrique, dans lequel on oriente , à partir d'un dispositif de buse (1, 2), un gaz de plasma, entouré d'un agent secondaire, vers une pièce à usiner, alors qu'un flux de marquage s'écoule entre le dispositif de buse (1, 2) et la pièce à usiner (3), **caractérisé en ce qu'on** oriente, au cours du marquage, de l'eau comme agent secondaire , entourant le gaz de plasma, vers la pièce à usiner et **en ce qu'**on règle le débit du gaz vers la pièce à usiner (3) de sorte que l'eau s'évapore au cours du marquage.

2. Procédé selon la revendication 1, **caractérisé en ce que** l'énergie pour le marquage par un arc électrique est rétrécie grâce à l'eau utilisée comme agent secondaire et diffusée vers l'arc électrique, alors que la surface de la pièce à usiner est refroidie par de l'eau diffusée.

3. Procédé selon la revendication 1, **caractérisé en ce que** le gaz de plasma sort d'une buse intérieure et **en ce que** l'eau sort d'une fente annulaire (2) du dispositif de buse (1, 2) entourant ladite buse .

4. Procédé selon une des revendications précédentes , **caractérisé par** un courant de marquage de 20 A.

5. Procédé selon une des revendications précédentes , **caractérisé par** l'utilisation d'argon, d'un mélange d'argon - dioxyde de carbone, d'un mélange d'argon - hydrogène ou d'un autre gaz de plasma formé par l'argon.
